# FASCICULE DE BREVET EUROPEEN

(11) **EP 4 118 965 B1**
(45) Date de publication et mention de la délivrance du brevet: **26.11.2025**
(21) Numéro de dépôt: 22185738.6
(22) Date de dépôt: 19.07.2022
(51) Int. Cl.: A01M 7/00, B05B 1/20, G05D 11/00

(54) **CIRCUIT DE LIQUIDE POUR PULVERISATEUR AGRICOLE COMPRENANT UN SYSTEME DE TRANSFERT ETANCHE ET UN MECANISME DOSEUR**
FLÜSSIGKEITSKREISLAUF FÜR LANDWIRTSCHAFTLICHES SPRÜHGERÄT MIT DICHTEM TRANSFERSYSTEM UND DOSIERMECHANISMUS
LIQUID CIRCUIT FOR AGRICULTURAL SPRAYER COMPRISING A SEALED TRANSFER SYSTEM AND A DISPENSING MECHANISM

(30) Priorité: 16.07.2021 FR 2107706
(43) Date de publication de la demande: 18.01.2023
(73) Titulaire: Exel Industries, 51200 Epernay (FR)
(72) Inventeur: PITAUD, Sylvain, 51200 EPERNAY (FR)
(74) Mandataire: Bandpay & Greuter

(56) Documents cités:
- FR-A1- 3 026 400
- US-A1- 2013 140 376

## Description

### DOMAINE TECHNIQUE

L'invention concerne un circuit de liquide pour pulvérisateur agricole, un pulvérisateur agricole pour engin agricole comprenant un tel circuit de liquide et un engin agricole comprenant un tel pulvérisateur agricole.

### ÉTAT DE LA TECHNIQUE ANTÉRIEURE

Il est connu de l'art antérieur des systèmes de transfert étanche pour pulvérisateur agricole, notamment nommés « Closed Transfer System » en terminologie anglaise ou encore « CTS ».

De tels systèmes de transfert étanche sont prévus pour transférer du produit liquide d'un bidon à une cuve principale du pulvérisateur agricole de façon étanche. Pour cela, le bidon est souvent placé à l'envers, le goulot dudit bidon étant orienté vers le bas et coopérant avec le système de transfert étanche pour assurer le transfert étanche de produit liquide du bidon à la cuve principale. Au cours du transfert, le produit liquide est souvent incorporé à de l'eau claire, de manière à former un liquide de traitement à pulvériser sur des végétaux à traiter d'un champ.

Or, en fonction de la quantité de produit liquide à transférer du bidon vers la cuve principale, il peut arriver que le bidon ne soit pas à vider complètement et donc que seule une partie du produit liquide contenu dans le bidon soit à transférer vers la cuve principale. Un dosage du produit liquide transféré du bidon à la cuve principale s'avère alors nécessaire.

Afin d'assurer ce dosage, un agriculteur peut par exemple ouvrir manuellement une vanne du système de transfert étanche pour autoriser un transfert du produit liquide du bidon vers la cuve principale jusqu'à ce qu'au vu de la quantité restante de produit liquide dans le bidon, il lui semble que la quantité de produit liquide transféré du bidon vers la cuve principale corresponde à peu près à la quantité souhaitée et qu'il ferme la vanne du système de transfert étanche.

Un tel dosage n'est donc pas précis, ce qui peut mener à un surdosage tout comme à un sous dosage du liquide de traitement en produit liquide. Le cas du surdosage n'est pas acceptable d'un point de vue environnemental. Dans le cas du sous dosage, l'efficacité du liquide de traitement pulvérisé sur les végétaux à traiter du champ est nécessairement réduite, ce qui peut conduire à une baisse de rendement du champ et n'est donc pas acceptable pour l'agriculteur.

Il existe donc un besoin de prévoir un dosage précis lors d'un transfert de produit liquide d'un bidon vers une cuve principale au moyen d'un système de transfert étanche.

US 2013/140376 A1 décrit un pulvérisateur agricole comprenant un circuit de transfert et dosage précis d'un ou plusieurs produits liquides pour la formation d'un liquide de traitement à pulvériser.

### EXPOSÉ DE L'INVENTION

A cet effet, l'invention a pour objet un circuit de liquide pour pulvérisateur agricole comprenant :
- une cuve principale,
- un système de transfert étanche apte à transférer un produit liquide contenu dans un bidon vers le circuit de liquide de façon étanche,
- un mécanisme d'aspiration conçu pour aspirer du produit liquide provenant du système de transfert étanche et pour refouler ledit produit liquide vers la cuve principale,
- un mécanisme doseur agencé en aval du système de transfert étanche et en amont du mécanisme d'aspiration,
- une unité de commande conçue pour déterminer une quantité de produit liquide à fournir au mécanisme d'aspiration pour le remplissage de la cuve principale, et pour commander le mécanisme doseur de fournir la quantité déterminée de produit liquide au mécanisme d'aspiration, de manière à doser le produit liquide transféré du système de transfert étanche à la cuve principale.

Selon l'invention, le mécanisme doseur comprend une pompe volumétrique agencée en aval du système de transfert étanche et en amont du mécanisme d'aspiration ; et
- le circuit de liquide comprend une voie de dérivation agencée en parallèle de la pompe volumétrique, entre le système de transfert étanche et le mécanisme d'aspiration, et conçue pour autoriser du produit liquide provenant du système de transfert étanche de contourner la pompe volumétrique pour son aspiration par le mécanisme d'aspiration, lorsque la voie de dérivation est ouverte

Selon des modes de réalisation qui peuvent être pris ensemble ou séparément :
- la pompe volumétrique est une pompe à engrenages ou à lobes, ou une pompe à pistons axiaux à cylindrée variable, à plateau inclinable ou à axe brisé, ou une pompe péristaltique, ou une pompe sans vanne à unique piston rotatif ou une pompe à piston avec clapet ;
- l'unité de commande est conçue pour déterminer, à partir de la quantité déterminée de liquide de traitement et d'une cylindrée de la pompe volumétrique, d'un nombre de tours à effectuer par la pompe volumétrique, et pour commander la pompe de volumétrique de tourner le nombre déterminé de tours ;
- l'unité de commande est conçue pour commander la pompe volumétrique de tourner à une vitesse de rotation plus élevée pendant une phase d'aspiration et à une vitesse de rotation plus faible pendant une phase de refoulement de chaque cycle de la pompe volumétrique, la variation de vitesse de rotation entre la phase d'aspiration et de refoulement étant progressive ;
- le mécanisme doseur comprend une vanne doseuse conçue pour s'ouvrir et se fermer et un débitmètre agencé en amont ou en aval de la vanne doseuse et en amont du mécanisme d'aspiration et conçu pour mesurer un débit de produit liquide s'écoulant depuis la vanne doseuse vers le mécanisme d'aspiration, l'unité de commande étant conçue pour déterminer, à partir du débit mesuré par le débitmètre et de la quantité déterminée de produit liquide, une quantité restante de produit liquide à fournir au mécanisme d'aspiration pour le remplissage de la cuve principale, et pour commander la vanne doseuse de se fermer lorsque la quantité restante déterminée de produit liquide est nulle ;
- le circuit de liquide comprend une cuve de rinçage destinée à contenir un liquide de rinçage et une voie de rinçage reliant la cuve de rinçage à un dispositif de rinçage du système de transfert étanche apte à rincer le bidon et comprenant une pompe de rinçage conçue pour aspirer du liquide de rinçage provenant de la cuve de rinçage et pour le refouler vers le dispositif de rinçage.

L'invention concerne encore un pulvérisateur agricole pour engin agricole comprenant un circuit de liquide tel que précédemment décrit.

L'invention concerne aussi un engin agricole comprenant un pulvérisateur agricole tel que précédemment décrit, dans lequel le système de transfert étanche est embarqué à bord de l'engin agricole.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence au dessin annexé sur lequel :

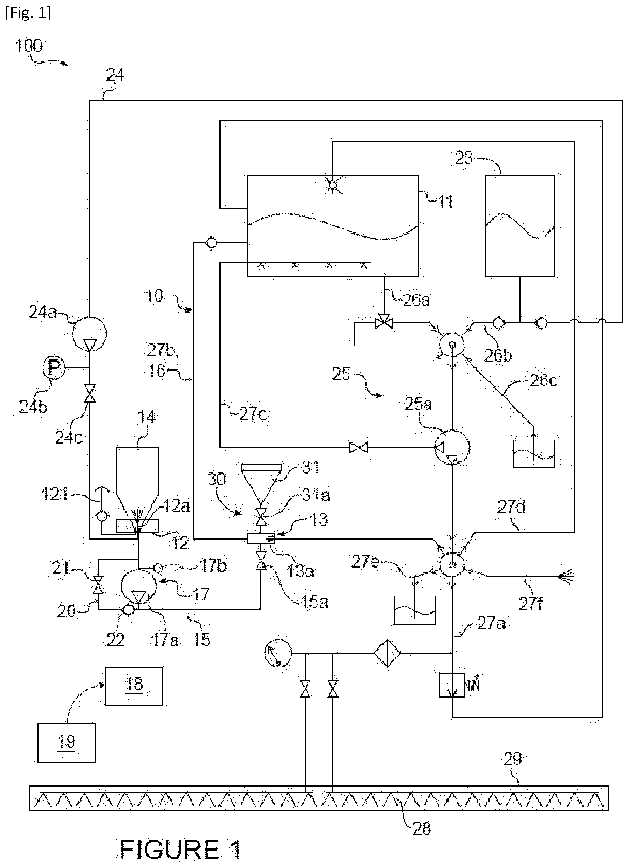

[Fig.1] est une vue schématique d'un pulvérisateur agricole comprenant un circuit de liquide selon un mode de réalisation de l'invention.

### DESCRIPTION DETAILLEE

La figure 1 montre un pulvérisateur agricole 100 pour engin agricole, le pulvérisateur agricole 100 étant destiné à pulvériser un liquide de traitement dans un champ de végétaux à traiter, par exemple de grandes cultures, telles que la culture de céréales, et comprenant un circuit de liquide 10 selon un mode de réalisation de l'invention.

Le pulvérisateur agricole 100 est par exemple en contact avec un sol, notamment du champ de végétaux à traiter, par exemple par l'intermédiaire de roues (non représentées) permettant son déplacement.

Le pulvérisateur agricole 100 est par exemple destiné à être tracté par l'engin agricole, tel qu'un tracteur. En variante, le pulvérisateur agricole 100 est destiné à être porté par l'engin agricole. Encore en variante, le pulvérisateur agricole 100 est automoteur et forme donc l'engin agricole.

Il est adopté à titre non limitatif un repère orthogonal comprenant une direction longitudinale vers l'avant dans le sens d'avancement de l'engin agricole, une direction transversale vers la gauche et une direction verticale vers le haut. Les directions longitudinale et transversale sont horizontales, globalement parallèles au sol.

Le circuit de liquide 10 comprend une cuve principale 11 destinée à contenir un liquide de traitement, telle qu'un mélange d'eau claire et de produit phytosanitaire, aussi appelé « bouillie », un système de transfert étanche 12 et un mécanisme d'aspiration 13.

Le système de transfert étanche 12 est apte à transférer un produit liquide contenu dans un bidon 14, tel que du produit phytosanitaire, vers le circuit de liquide 10 de façon étanche. Le système de transfert étanche 12 est aussi appelé « Closed Transfer System » en anglais ou encore « CTS ». Le système de transfert étanche 12 est notamment conforme à la norme ISO 21191 publiée le 26 février 2021. Le système de transfert étanche 12 est en particulier apte à mettre en communication le bidon avec le circuit de liquide 10, lorsque le bidon est raccordé de manière étanche au système de transfert étanche 12.

Le bidon 14 comprend par exemple un goulot (non référencé) prévu pour se connecter de manière étanche avec le système de transfert étanche 12. Pour cela, des moyens de connexion étanche et réversible entre le goulot du bidon 14 et le système de transfert étanche 12 sont prévus. Lorsque le goulot du bidon 14 et le système de transfert étanche 12 sont connectés de manière étanche l'un avec l'autre, le bidon 14 est par exemple retourné, son goulot étant orienté vers le bas, de sorte que le produit liquide contenu dans le bidon 14 se déverse dans le système de transfert étanche 12 et donc dans le circuit de liquide 10 notamment par gravité.

Le système de transfert étanche 12 peut encore comprendre un dispositif de rinçage 12a apte à rincer l'intérieur du bidon 14 avec un liquide de rinçage, tel que de l'eau claire, notamment lorsque le goulot du bidon 14 coopère de manière étanche avec le système de transfert étanche 12. Lors du rinçage du bidon 14, le liquide de rinçage s'évacue par le système de transfert étanche 12 vers le circuit de liquide 10 de la même manière que le produit liquide.

Le système de transfert étanche 12 est par exemple embarqué sur l'engin agricole.

Le mécanisme d'aspiration 13 est conçu pour aspirer du produit liquide provenant du système de transfert étanche 12, notamment via une voie de transfert 15, et pour refouler le produit liquide aspiré vers la cuve principale 11, notamment via une ligne d'incorporation 16. Comme cela sera expliqué plus en détail ci-après, le produit liquide est notamment incorporé à de l'eau claire ou à de la pré-bouillie lors de son refoulement vers la cuve principale 11, de manière à former le liquide de traitement à pulvériser sur les végétaux à traiter du champ.

Dans la suite de la description, les termes « amont » et « aval » tiennent compte du sens de circulation du liquide dans le circuit de liquide 10, qui est imposé par le mécanisme d'aspiration 13.

Le circuit de liquide 10 comprend encore un mécanisme doseur 17, ainsi qu'une unité de commande 18 électronique.

Le mécanisme doseur 17 est agencé en aval du système de transfert étanche 12 et en amont du mécanisme d'aspiration 13, notamment le long de la voie de transfert 15.

L'unité de commande 18 est conçue pour déterminer une quantité de produit liquide à fournir au mécanisme d'aspiration 13 pour le remplissage de la cuve principale 11, et pour commander le mécanisme doseur 17 de fournir la quantité déterminée de produit liquide au mécanisme d'aspiration 13.

Le mécanisme doseur 17 et l'unité de commande 18 permettent ainsi de réaliser un dosage précis du produit liquide provenant du système de transfert étanche 12, évitant ainsi les risques liés à un surdosage ou à un sous dosage du liquide de traitement en produit liquide. La quantité de produit liquide à fournir au mécanisme d'aspiration 13 pour le remplissage de la cuve principale 11 est par exemple déterminée à partir de paramètres de traitement prédéfinis tel qu'un volume de la cuve principale 11, une surface du champs de végétaux à traiter, un volume de produit liquide à utiliser par unité de surface, et/ou une quantité déjà transférée de produit liquide à la cuve principale 11. Les paramètres de traitement sont par exemple préenregistrés dans une mémoire de données de l'unité de commande 18. Un, plusieurs ou tous les paramètres de traitement peuvent sinon être enregistrés par un agriculteur dans la mémoire de données de l'unité de commande 18, via une interface utilisateur 19.

Le mécanisme doseur 17 comprend une pompe volumétrique 17a agencée en aval du système de transfert étanche 12 et en amont du mécanisme d'aspiration 13, notamment le long de la voie de transfert 15. Le transfert de produit liquide dans la pompe volumétrique 17a se fait au moyen d'un ou plusieurs organes, qui sont entraînés en rotation par un moteur, notamment au moyen d'un arbre tournant, et qui entraînent un volume de produit liquide en déplacement à chacune de leur rotation. Le moteur est piloté par l'unité de commande 18. Le moteur peut être piloté directement par l'unité de commande 18, lorsque le moteur est électrique, ou indirectement lorsque moteur est hydraulique, l'unité de commande 18 pilotant un circuit hydraulique pilotant lui-même le moteur. Chaque cycle de la pompe volumétrique 17a comprend une phase d'aspiration au cours de laquelle la pompe volumétrique 17a aspire un volume de produit liquide et une phase de refoulement au cours de laquelle la pompe volumétrique 17a refoule le volume de produit liquide. Chaque cycle correspond à un ou plusieurs tours de l'arbre du moteur et donc à une rotation des organes entraînés en rotation par le moteur. A chaque cycle, la pompe volumétrique 17a délivre donc un volume défini de produit liquide, et donc une quantité définie de produit liquide, permettant ainsi le dosage du produit liquide provenant du système transfert étanche 12 pour le remplissage de la cuve principale 11.

Le moteur de la pompe volumétrique 17a est par exemple un moteur pas à pas ou un servomoteur, de sorte à assurer un pilotage précis du moteur et donc de la pompe volumétrique 17a en nombre de tours et/ou en vitesse de rotation. Un pilotage précis de la pompe volumétrique 17a permet d'améliorer encore la précision du dosage de produit liquide provenant du système de transfert étanche 12.

La pompe volumétrique 17a peut être une pompe à engrenages ou à lobes, une pompe à pistons axiaux à cylindrée variable, notamment à plateau inclinable ou à axe brisé, une pompe péristaltique ou encore une pompe sans vanne à unique piston rotatif. De telles pompes volumétriques 17a présentent l'avantage de ne pas être ou de n'être que peu dépendantes de la viscosité du produit liquide qui les traverse. Ainsi, quel que soit le produit liquide contenu dans le bidon 14 et sa viscosité, la pompe volumétrique 17a est capable de délivrer la même quantité de produit liquide pour un même volume. Cela permet d'augmenter la précision du dosage effectué au moyen de la pompe volumétrique 17a.

Les pompes à engrenages ou à lobes, les pompes péristaltiques et les pompes à pistons axiaux à cylindrée variable, à plateau inclinable ou à axe brisé, sont bien connues de l'homme du métier. Elles ne seront donc pas détaillées ici.

Il est entendu par « pompe sans vanne à unique piston rotatif », une pompe telle que par exemple décrite dans les documents US 4 941 809 A et US 5 246 354 B1.

Une telle pompe comprend notamment un moteur pourvu d'un arbre tournant autour d'un axe de moteur, un piston logé dans un cylindre et un organe convertisseur de mouvement. Le piston s'étend suivant un axe de piston, sécant ou confondu avec l'axe de moteur, et comprend une première extrémité pourvue d'un pion radial par rapport à l'axe de piston et une deuxième extrémité opposée par rapport à l'axe de piston et pourvue d'un méplat. Le piston et le cylindre sont en outre montés solidaires en pivotement par rapport au moteur, autour d'un axe de pivotement perpendiculaire à l'axe de moteur et à l'axe de piston. L'axe de piston est ainsi inclinable par rapport à l'axe de moteur dans un plan perpendiculaire à l'axe de pivotement.

L'organe convertisseur de mouvement comprend un fond solidaire en rotation avec l'arbre du moteur et une paroi latérale s'étendant, depuis le fond, autour de l'axe de moteur. Le pion radial du piston coopère avec une noix de rotule logée dans la paroi latérale de l'organe convertisseur de mouvement. L'organe convertisseur de mouvement est ainsi capable d'entraîner en rotation le piston autour de l'axe de piston. La noix de rotule autorise en outre le piston et le cylindre de pivoter par rapport au moteur autour de l'axe de pivotement.

De cette manière, lorsque l'arbre du moteur tourne autour de l'axe de moteur, il entraîne en rotation l'organe convertisseur de mouvement, qui entraîne lui-même en rotation le piston du fait de la coopération entre le pion radial du piston et de la noix de rotule de l'organe convertisseur de mouvement. Par ailleurs, en fonction de l'angle formé entre l'axe de moteur et l'axe du piston, et donc en fonction de l'inclinaison du piston par rapport à l'arbre du moteur, l'organe convertisseur de mouvement entraîne ou non le piston en coulissement dans le cylindre le long de l'axe de piston. En particulier, lorsque l'axe de moteur et l'axe du piston sont confondus, il n'y aucun coulissement du piston dans le cylindre. La course du piston dans le cylindre est donc variable et une telle pompe est à cylindrée variable, la cylindrée variant en fonction de l'angle entre l'axe de moteur et l'axe de piston.

Le cylindre comprend encore au moins deux ouvertures parmi lesquelles au moins une entrée et au moins une sortie. Par exemple, le cylindre comprend une entrée et une sortie qui sont diamétralement opposées par rapport à l'axe de piston. Les ouvertures communiquent avec le logement du cylindre dans lequel le piston est prévu pour coulisser. Le méplat du piston est en outre conçu pour autoriser l'entrée de fluide dans le logement du cylindre et bloquer la sortie de fluide dudit logement, lorsque la première extrémité du piston s'écarte du cylindre (phase d'aspiration), pour bloquer l'entrée et la sortie de fluide du logement du cylindre, lorsque la première extrémité du piston est au plus éloigné du cylindre, pour bloquer l'entrée de fluide dans le logement du cylindre et autoriser la sortie de fluide dudit logement, lorsque la première extrémité du piston se rapproche du cylindre (phase de refoulement), et pour bloquer l'entrée et la sortie de fluide du logement du cylindre, lorsque la première extrémité du piston est au plus proche du cylindre. Ce fonctionnement n'est cependant applicable qu'à une plage définie d'angles entre l'axe de moteur et l'axe de piston, dite plage de fonctionnement. L'angle nul est bien sûr exclu de cette plage puisqu'à cet angle le piston ne coulisse pas dans le cylindre. Par ailleurs, lorsque l'angle entre l'axe de moteur et l'axe de piston est supérieur à cette plage, le piston n'est plus capable d'obstruer les ouvertures du logement du cylindre, de sorte qu'elles communiquent entre elles, via le logement du cylindre. Le montage de la noix de rotule dans l'organe convertisseur de mouvement contraint aussi la plage de fonctionnement. Le méplat du piston peut bien sûr être remplacé par une rainure ou toute autre forme apte à assurer le fonctionnement décrit ci-dessus.

Par exemple, pour le nettoyage de la pompe, l'organe convertisseur de mouvement est tourné autour de l'axe de moteur de sorte à positionner le pion radial du piston de manière sensiblement parallèle à l'axe de pivotement. Il est entendu par « sensiblement parallèle à l'axe de pivotement », qu'à angle nul entre l'axe de moteur et l'axe de piston, le pion radial du piston est parallèle à l'axe de pivotement. Dans cette position du pion radial du piston, la noix de rotule autorise en effet un angle entre l'axe de moteur et l'axe de piston supérieur à la plage de fonctionnement. Le piston et le cylindre peuvent alors être pivotés de sorte que l'angle entre l'axe de moteur et l'axe de piston soit supérieur à la plage de fonctionnement et les ouvertures du logement du cylindre communiquent entre elles. La pompe peut alors être à l'arrêt pour son nettoyage, ce qui le facilite. Des capteurs, tels qu'un capteur d'indexation sur l'arbre moteur et un capteur de remise à zéro, peuvent être prévus pour autoriser le pilotage de la pompe au-delà de cette plage pour son nettoyage et pour assurer son retour dans la plage pour le dosage de produit liquide.

L'unité de commande 18 est conçue pour déterminer, à partir de la quantité déterminée de produit liquide et d'une cylindrée de la pompe volumétrique 17a, un nombre de tours à effectuer par la pompe volumétrique 17a, notamment par l'arbre du moteur de la pompe volumétrique 17a, et pour commander la pompe volumétrique 17a de tourner le nombre déterminé de tours. Comme indiqué ci-avant, un pilotage précis de la pompe volumétrique 17a permet d'améliorer la précision du dosage de produit liquide provenant du système de transfert étanche 12.

La cylindrée de la pompe volumétrique 17a est par exemple préenregistrée dans la mémoire de données de l'unité de commande 18. La cylindrée de la pompe volumétrique 17a peut aussi être enregistrée par l'agriculteur dans la mémoire de données de l'unité de commande 18, via l'interface utilisateur 19. Dans le cas d'une pompe volumétrique 17a à cylindrée variable, l'unité de commande 18 peut être conçue pour déterminer la cylindrée de la pompe volumétrique 17a à un instant t, et pour déterminer, à partir de la cylindrée de la pompe volumétrique 17a à l'instant t, le nombre de tours à effectuer par la pompe volumétrique 17a.

L'unité de commande 18 peut aussi être conçue pour commander la pompe volumétrique 17a, notamment l'arbre du moteur, de tourner à une vitesse de rotation plus élevée pendant la phase d'aspiration et à une vitesse de rotation plus faible pendant la phase de refoulement de chaque cycle de la pompe volumétrique 17a. La variation de la vitesse de rotation entre la phase d'aspiration et la phase de refoulement est en outre progressive. De cette manière, à chaque cycle, la phase d'aspiration de la pompe volumétrique 17a est plus courte que sa phase de refoulement. Par ailleurs, la variation de la vitesse de rotation étant progressive, cela permet d'éviter les à-coups et donc de limiter les pulsations qui peuvent être produites par la pompe volumétriques 17a du fait de ses phases d'aspiration et de refoulement et qui peuvent entraîner des variations de quantité de produit liquide sortant de la pompe volumétrique 17a. Les vitesses de rotation pendant les phases d'aspiration et de refoulement de la pompe volumétrique 17a sont par exemple déterminées de sorte que la phase d'aspiration dure 25% d'un cycle de la pompe volumétrique 17a et que la phase de refoulement dure 75% d'un cycle de la pompe volumétrique 17a. La pompe volumétrique 17a peut encore être pourvue d'une cloche à air (non représentée) ou accumulateur d'air pour limiter les pulsations de ladite pompe volumétrique 17a.

Le sens de rotation de la pompe volumétrique 17a, notamment de l'arbre du moteur, peut être réversible. La pompe volumétrique 17a est par exemple apte à tourner dans un premier sens de rotation pour refouler du produit liquide vers le mécanisme d'aspiration 13, et pour tourner dans un deuxième sens de rotation opposé pour refouler du produit liquide vers le système de transfert étanche 12 et le bidon 14. Lorsque la pompe volumétrique 17a tourne dans le deuxième sens de rotation, il est possible de refouler du produit liquide évacué du bidon 14 en surplus, notamment du produit liquide se trouvant dans les volumes morts du système de transfert étanche 12 et de la voie de transfert 15 entre le système de transfert étanche 12 et l'entrée de la pompe volumétrique 17a. La pompe volumétrique 17a peut être alimentée en eau claire pour le refoulement du produit liquide vers le système de transfert étanche 12 et le bidon 14 par la pompe volumétrique 17a dans le deuxième sens de rotation. L'unité de commande 18 est par exemple conçue pour commander la pompe volumétrique 17a de tourner dans le premier ou dans le deuxième sens de rotation. Sauf mention explicite, lorsqu'il est décrit que la pompe volumétrique 17a tourne, la pompe volumétrique 17a tourne dans le premier sens de rotation. De même, sauf mention explicite, l'aspiration et le refoulement de la pompe volumétrique 17a correspondent à l'aspiration et au refoulement de la pompe volumétrique 17a tournant dans le premier sens de rotation. Ces volumes morts peuvent aussi être pré-calculés et pris en considération lors de la détermination du nombre de tours à effectuer par la pompe volumétrique 17a.

Le mécanisme doseur 17 comprend par exemple encore un ou plusieurs détecteurs de présence de liquide 17b conçus pour détecter la présence de liquide à l'entrée de la pompe volumétrique 17a et pour envoyer un signal de détection de liquide à l'unité de commande 18, lorsque le ou les détecteurs de présence de liquide 17b détectent du liquide à l'entrée de la pompe volumétrique 17a. L'unité de commande 18 est conçue pour recevoir le signal de détection du ou des détecteurs de présence de liquide 17b et pour commander la pompe volumétrique 17a de tourner le nombre déterminé de tours à compter de la réception du signal de détection. De cette manière, le dosage de produit liquide ne démarre qu'une fois que du produit liquide a atteint la pompe volumétrique 17a, ce qui permet de s'affranchir des volumes morts du système de transfert étanche 12 et de la voie de transfert 15 entre le système de transfert étanche 12 et l'entrée de la pompe volumétrique 17a, et donc d'améliorer la précision du dosage. En variante, ces volumes morts sont pré-calculés et pris en considération lors de la détermination du nombre de tours à effectuer par la pompe volumétrique 17a.

Le circuit de liquide 10 comprend par ailleurs une voie de dérivation 20 agencée en parallèle de la pompe volumétrique 17a, entre le système de transfert étanche 12 et le mécanisme d'aspiration 13. La voie de dérivation 20 est ainsi reliée au système de transfert étanche 12 en amont de la pompe volumétrique 17a et au mécanisme d'aspiration 13 en aval de la pompe volumétrique 17a. La voie de dérivation 20 est en outre conçue pour autoriser du produit liquide provenant du système de transfert étanche 12 de contourner la pompe volumétrique 17a pour son aspiration par le mécanisme d'aspiration 13, et donc de court-circuiter la pompe volumétrique 17a, lorsque la voie de dérivation 20 est ouverte. La voie de dérivation 20 permet ainsi de s'affranchir du dosage de produit liquide transféré vers la cuve principale 11, lorsqu'un tel dosage n'est par exemple pas nécessaire. Cela peut être le cas lorsque le bidon 14 doit être vidé complètement.

Pour cela, la voie de dérivation 20 comprend par exemple une vanne de dérivation 21 conçue pour s'ouvrir et se fermer. La voie de dérivation 20 peut aussi comprendre un clapet anti-retour 22 conçu pour empêcher du liquide de traitement circulant le long de la voie de dérivation 20 de refouler vers le système de transfert étanche 12.

L'unité de commande 18 est par exemple conçue pour commander la voie de dérivation 20, notamment la vanne de dérivation 21, de s'ouvrir, lorsque l'unité de commande 18 reçoit une instruction de ne pas doser de liquide de traitement provenant du système de transfert étanche 12, et de se fermer, lorsque l'unité de commande 18 reçoit une instruction de doser de liquide de traitement provenant du système de transfert étanche 12. L'instruction de doser ou de ne pas doser le liquide de traitement provenant du système de transfert étanche 12 peut être envoyée par l'interface utilisateur 19. L'agriculteur envoie par exemple à l'unité de commande 18 l'instruction de ne pas doser le liquide de traitement provenant du système de transfert étanche 12, lorsque le bidon 14 doit être vidé complètement.

La voie de transfert 15 peut encore comprendre une première vanne de coupure 15a agencée en aval de la pompe volumétrique 17a et le cas échéant, de la voie de dérivation 20. La première vanne de coupure 15a est notamment conçue pour ouvrir et pour fermer la connexion entre la voie de transfert 15 et la ligne d'incorporation 16, de manière à autoriser ou à empêcher le transfert de produit liquide du système de transfert étanche 12 vers la cuve principale 11, via le mécanisme d'aspiration 13 et la ligne d'incorporation 16. La première vanne de coupure 15a peut être pilotée manuellement ou par l'unité de commande 18.

En variante (non revendiquée et non représentée) de la pompe volumétrique 17a, le mécanisme doseur 17 comprend une vanne doseuse agencée en amont du mécanisme d'aspiration 13 et conçue pour s'ouvrir et se fermer, ainsi qu'un débitmètre agencé en amont ou en aval de la vanne doseuse et en amont du mécanisme d'aspiration 13. Le débitmètre est conçu pour mesurer un débit de produit liquide s'écoulant vers le mécanisme d'aspiration 13, notamment le long de la voie de transfert 15. L'unité de commande 18 est alors conçue pour déterminer, à partir du débit mesuré par le débitmètre et de la quantité déterminée de produit liquide, une quantité restante de produit liquide à fournir au mécanisme d'aspiration 13 pour le remplissage de la cuve principale 11, et pour commander la vanne doseuse de se fermer lorsque la quantité restante déterminée de produit liquide est nulle. La vanne doseuse peut être une vanne intégrée au système de transfert étanche 12 ou une vanne séparée du système de transfert étanche 12 et agencée en aval du système de transfert étanche 12 le long de la voie de transfert 15.

Le circuit de liquide 10 peut aussi comprendre une cuve de rinçage 23 destinée à contenir du liquide de rinçage, tel que de l'eau claire, et une voie de rinçage 24 reliant la cuve de rinçage 23 au dispositif de rinçage 12a du système de transfert étanche 12 et comprenant une pompe de rinçage 24a conçue pour aspirer du liquide de rinçage provenant de la cuve de rinçage 23 et pour le refouler vers le dispositif de rinçage 12a du système de transfert étanche 12. La pompe de rinçage 24a est par exemple une pompe à pistons membranes. Dans la suite de la description, les termes « amont » et « aval » tiennent compte du sens de circulation du liquide dans le circuit de liquide 10, qui est imposé par la pompe de rinçage 24a.

Un capteur de pression 24b peut encore prévu en aval de ou intégré à la pompe de rinçage 24a. Le capteur de pression 24b est conçu pour mesurer une pression du liquide de rinçage circulant le long de la voie de rinçage 24. L'unité de commande 18 ou une unité de commande intégrée à la pompe de rinçage 24a est par exemple conçue pour commander la pompe de rinçage 24a de s'arrêter, lorsque la pression mesurée par le capteur de pression 24b est supérieure ou égale à une pression seuil, et pour commander la pompe de rinçage 24a de fonctionner, lorsque la pression mesurée par le capteur de pression 24b est strictement inférieure à la pression seuil. Cela permet ainsi de s'assurer que la pression en aval de la pompe de rinçage 24a est supérieure ou égale à la pression seuil. La pression seuil est par exemple préenregistrée dans la mémoire de données de l'unité de commande 18 ou de l'unité de commande intégrée à la pompe de rinçage 24a. La pression seuil peut sinon être enregistrée par l'agriculteur dans la mémoire de données de l'unité de commande 18 ou de l'unité de commande intégrée à la pompe de rinçage 24a, via l'interface utilisateur 19 ou une interface utilisateur dédiée à la pompe de rinçage 24a. Une vanne de rinçage 24c peut encore être prévue le long de la voie de rinçage 24, notamment en aval de la pompe de rinçage 24a. La vanne de rinçage 24c est conçue pour ouvrir et pour fermer la voie de rinçage 24, de manière à autoriser ou empêcher du liquide de rinçage d'alimenter le dispositif de rinçage 12a du système de transfert étanche 12. La vanne de rinçage 24a peut être pilotée manuellement ou par l'unité de commande 18.

La voie de rinçage 24 peut aussi comprendre un clapet anti-retour (non référencé), notamment agencé en amont de la pompe de rinçage 24a, de manière à empêcher un retour de liquide de rinçage vers la cuve de rinçage 23.

Le système de transfert étanche 12 peut aussi être équipé d'un évent 121 communiquant d'une part avec l'air extérieur et d'autre part avec l'intérieur du bidon 14, lorsque le bidon 14 est connecté de manière étanche au système de transfert étanche 12. L'évent 121 permet d'incorporer de l'air à l'intérieur du bidon 14 afin d'éviter toutes déformations ou tous écrasements de ce dernier lors de sa vidange. L'évent 121 peut en outre être équipé d'un clapet anti-retour (non référencé) conçu pour empêcher du produit liquide provenant du bidon 14 de s'échapper par l'évent 121.

Le circuit de liquide 10 comprend par exemple aussi un ensemble de pompage 25, des lignes d'alimentation 26a, 26b, 26c et des lignes de refoulement 27a, 27b, 27c, 27d, 27e, 27f dont la ligne d'incorporation 16 fait partie.

L'ensemble de pompage 25 comprend une pompe principale 25a comprenant elle-même une entrée par laquelle la pompe principale 25a aspire un liquide et au moins une sortie par laquelle la pompe principale 25a refoule le liquide aspiré par l'entrée.

Dans la suite de la description, les termes « amont » et « aval » tiennent compte du sens de circulation du liquide dans le circuit de liquide 10, qui est imposé par la pompe principale 25a.

Les lignes d'aspiration 26a, 26b, 26c sont chacune reliées, en aval, à l'entrée de la pompe principale 25a. Les lignes d'aspiration 26a, 26b, 26c sont ainsi agencées en amont de la pompe principale 25a. La pompe principale 25a peut ainsi aspirer du liquide dans chacune des lignes d'aspiration 26a, 26b, 26c pour le refouler. Les lignes d'aspiration 26a, 26b, 26c sont parallèles entre elles.

L'une 26a des lignes d'aspiration 26a, 26b, 26c, dite ligne d'aspiration de cuve principale, relie la cuve principale 11 à l'entrée de la pompe principale 25a. La pompe principale 25a peut ainsi aspirer du liquide de traitement provenant de la cuve principale 11 pour le refouler.

Une autre 26b des lignes d'aspiration 26a, 26b, 26c, dite ligne d'aspiration de rinçage, relie la cuve de rinçage 23 à la pompe principale 25a. La pompe principale 25a peut alors aspirer de l'eau claire provenant de la cuve de rinçage 23 pour rincer ou nettoyer le circuit de liquide 10. La ligne d'aspiration de rinçage 26b comprend par exemple un tronçon commun avec la voie de rinçage 24. Un clapet anti-retour (non référencé) peut encore être prévu le long de la ligne d'aspiration de rinçage 26b, notamment en aval du tronçon commun avec la voie de rinçage 24, de manière à empêcher un retour de liquide vers la cuve de rinçage 23.

Une autre 26c des lignes d'aspiration 26a, 26b, 26c, dite ligne d'aspiration externe, est par exemple destinée à être reliée à une source de liquide externe au pulvérisateur agricole 100. Pour cela, la ligne d'aspiration externe 26c peut comprendre un connecteur hydraulique d'entrée destiné à être connecté de manière réversible à la source de liquide externe au pulvérisateur agricole 100. La pompe principale 25a peut alors aspirer du liquide externe au pulvérisateur agricole 100.

Les lignes de refoulement 27a, 27b, 27c, 27d, 27e, 27f sont chacune reliées, en amont, à la ou l'une des sorties de la pompe principale 25a. Les lignes de refoulement 27a, 27b, 27c, 27d, 27e, 27f sont ainsi agencées en aval de la pompe principale 25a. La pompe principale 25a peut ainsi refouler du liquide dans chacune des lignes de refoulement 27a, 27b, 27c, 27d, 27e, 27f. Les lignes de refoulement 27a, 27b, 27c, 27d, 27e, 27f sont parallèles entre elles.

L'une 27a au moins des lignes de refoulement 27a, 27b, 27c, 27d, 27e, 27f, dite ligne de pulvérisation, comprend des buses de pulvérisation 28 montées sur une rampe de pulvérisation 29 du pulvérisateur agricole 100 et conçues pour pulvériser du liquide sur les végétaux à traiter du champs. Lorsque la pompe principale 25a aspire du liquide de traitement de la cuve principale 11 et que ce liquide de traitement aspiré est refoulé dans la ou les lignes de pulvérisation 27a, les buses de pulvérisation 28 pulvérisent du liquide de traitement de la cuve principale 11. La rampe de pulvérisation 29 s'étend par exemple suivant une direction d'extension principale horizontale, notamment globalement transversale.

Comme indiqué ci-avant, une autre 27b des deuxièmes lignes de refoulement 27a, 27b, 27c, 27d, 27e, 27f, est la ligne d'incorporation 16. La ligne d'incorporation 16 relie la ou l'une des sorties de la pompe principale 25a à la cuve principale 11. La ligne d'incorporation 16 comprend par exemple un ensemble d'incorporation 30 conçu pour incorporer un produit à incorporer au liquide refoulé par la pompe principale 25a et circulant le long de ladite ligne d'incorporation 16. De cette manière, la cuve principale 11 peut être remplie du liquide refoulé par la pompe principale 25a auquel a été incorporé le produit à incorporer. Le liquide refoulé par la pompe principale 25a peut être de l'eau claire provenant de la cuve de rinçage 23 via la ligne d'aspiration de rinçage 26b ou, par l'intermédiaire du connecteur hydraulique d'entrée et via la ligne d'aspiration externe 26c, d'une source d'eau claire externe au pulvérisateur agricole 100. Le liquide refoulé par la pompe principale 25a peut aussi être de la pré-bouillie provenant de la cuve principale 11 via la ligne d'aspiration de cuve principale 26a, la pré-bouillie étant un mélange d'eau claire et de produit à incorporer déjà réalisé par un ou plusieurs passages par la ligne d'incorporation 16.

Pour cela, l'ensemble d'incorporation 30 comprend notamment le mécanisme d'aspiration 13. Le mécanisme d'aspiration 13 comprend par exemple un dispositif à effet Venturi 13a conçu pour créer une dépression aspirant le produit à incorporer, lorsque du liquide refoulé par la pompe principale 25a circule le long de la ligne d'incorporation 16 à travers le dispositif à effet Venturi 13a. De cette manière, le produit à incorporer, qui est aspiré par le dispositif à effet Venturi 13a, est incorporé au liquide circulant le long de la ligne d'incorporation 16 à travers ledit dispositif à effet Venturi 13a pour remplir la cuve principale 11 de liquide auquel le produit à incorporer a été incorporé.

La ligne d'incorporation 16 peut encore comprendre un clapet anti-retour (non référencé) agencé en aval du mécanisme d'aspiration 13, notamment du dispositif à effet Venturi 13a, et conçu pour empêcher le liquide auquel a été incorporé le produit à incorporer et circulant le long de la ligne d'incorporation 16 de refouler vers le mécanisme d'aspiration 13. Cela permet notamment d'éviter que la cuve principale 11 se vide par la ligne d'incorporation 16, vers le mécanisme d'aspiration 13 et donc vers le système de transfert 12 et/ou vers le dispositif d'incorporation 31 qui est décrit ci-après, notamment lorsque la première et/ou la deuxième vanne de coupure 15a, 31a sont ouvertes.

Le produit à incorporer peut être du produit liquide provenant du système de transfert étanche 12. La dépression créée par le dispositif à effet Venturi 13a aspire alors le produit liquide provenant du système de transfert étanche 12 via la voie de transfert 15 qui est connectée au dispositif à effet Venturi 13, notamment lorsque la première vanne de coupure 15a est ouverte.

Le produit à incorporer peut aussi être du produit liquide ou du produit poudreux ou du produit sous forme de grains provenant d'un dispositif d'incorporation 31 de l'ensemble d'incorporation 30, tel qu'une trémie, qui est connecté au dispositif à effet Venturi 13a. Une deuxième vanne de coupure 31a peut être prévue entre le dispositif d'incorporation 31 et le dispositif à effet Venturi 13a. La deuxième vanne de coupure 31a est notamment conçue pour ouvrir et pour fermer la connexion entre le dispositif d'incorporation 31 et le dispositif à effet Venturi 13a, de manière à autoriser ou à empêcher le transfert de produit liquide ou poudreux ou sous forme de grains du dispositif d'incorporation 31 vers la cuve principale 11, via la ligne d'incorporation 16. La dépression créée par le dispositif à effet Venturi 13a aspire alors le produit liquide ou poudreux ou sous forme de grains provenant du dispositif d'incorporation 31, lorsque la deuxième vanne de coupure 31a est ouverte. La deuxième vanne de coupure 31a peut être pilotée manuellement ou par l'unité de commande 18.

L'unité de commande 18 est par exemple conçue pour interdire l'ouverture de la première vanne de coupure 15a, lorsque la deuxième vanne de coupure 31a est ouverte, et pour interdire l'ouverture de la deuxième vanne de coupure 31a, lorsque la première vanne de coupure 31a est ouverte. Ainsi, la première et la deuxième vannes de coupure 15a, 13a ne peuvent pas être ouvertes en même temps et la ligne d'incorporation 16 ne peut pas être simultanément alimentée en produit à incorporer de la voie de transfert 15 et du dispositif d'incorporation 31. En variante, notamment lorsque les première et deuxième vannes de coupure 15a, 31a sont pilotée manuellement, un système de détrompage mécanique est prévu entre les première et deuxième vannes de coupure 15a, 31a de manière à empêcher leur ouverture simultanée.

Une autre 27c des lignes de refoulement 27a, 27b, 27c, 27d, 27e, 27f, dite ligne de brassage, relie par exemple la ou l'une des sorties de la pompe principale 25a à la cuve principale 11. La ligne de brassage 27c débouche notamment en partie basse de ladite cuve principale 11, de manière être immergée dans le liquide de traitement contenu dans la cuve principale 11. La ligne de brassage 27c peut comprendre une restriction ou au moins une buse de brassage (non référencée) agencée dans la cuve principale 11, notamment en partie basse de la cuve principale 11, de manière à être immergée dans le liquide de traitement contenu dans la cuve principale 11. La ligne de brassage 27c peut ainsi envoyer le liquide refoulé par la pompe principale 25a vers la cuve principale 11, de manière à agiter, mélanger ou encore brasser le liquide de traitement contenu dans la cuve principale 11. Le liquide refoulé par la pompe principale 25a peut être du liquide de traitement provenant de la ligne d'aspiration de cuve principale 26a.

Une autre 27d des lignes de refoulement 27a, 27b, 27c, 27d, 27e, 27f, dite ligne de rinçage de cuve principale, comprend par exemple au moins une buse de rinçage (non référencée) agencée à l'intérieur de la cuve principale 11, notamment en partie haute de ladite cuve principale 11. La ou les buses de rinçage sont en outre conçues pour projeter le liquide refoulé par la pompe principale 25a à l'intérieur de la cuve principale 11, notamment sur des parois de ladite cuve principale 11. Le liquide refoulé par la pompe principale 25a peut être de l'eau claire provenant de la cuve de rinçage 23. De cette manière, la ou les buses de rinçage permettent de rincer la cuve principale 11.

Une autre 27e des lignes de refoulement 27a, 27b, 27c, 27d, 27e, 27f, dite ligne de refoulement externe, comprend par exemple un connecteur hydraulique de sortie destiné à être connecté de manière réversible à une cuve externe au pulvérisateur agricole 100, de sorte à transférer le liquide refoulé par la pompe principale 25a vers ladite cuve externe. Une autre 27f des lignes de refoulement 27a, 27b, 27c, 27d, 27e, 27f, dite ligne de lavage externe, comprend par exemple un dispositif de lavage externe, tel qu'un pistolet hydraulique, de manière à laver l'extérieur du pulvérisateur agricole 100 avec le liquide refoulé par la pompe principale 25a. Le liquide refoulé par la pompe principale 25a peut être de l'eau claire provenant de la cuve de rinçage 23 ou, par l'intermédiaire du connecteur hydraulique d'entrée de la ligne d'aspiration externe 26c, d'une source d'eau claire externe au pulvérisateur agricole 100.

L'ensemble de pompage 25 est conçu pour d'une part, sélectivement mettre en communication l'une des lignes d'aspiration 26a, 26b, 26c avec l'entrée de la pompe principale 25a, et d'autre part, sélectivement mettre en communication la ou l'une au moins des sorties de la pompe principale 25a avec l'une des ou des lignes de refoulement 27a, 27b, 27c, 27d, 27e, 27f. L'ensemble de pompage 25 permet ainsi de mettre en communication, par l'intermédiaire de la pompe principale 25a, les lignes d'aspiration 26a, 26b, 26c avec les lignes de refoulement 27a, 27b, 27c, 27d, 27e, 27f. A cet effet et tel que cela est représenté sur la figure 1, l'ensemble de pompage 25 peut comprendre, en amont de la pompe principale 25a, une vanne d'alimentation multivoies (non référencée), et, en aval de la pompe principale 25a, une vanne de distribution multivoies (non référencée). En variante, l'ensemble de pompage 25 peut comprendre, en amont de la pompe principale 25a, un collecteur d'alimentation et, en aval de la pompe principale 25a, un collecteur de distribution. L'ensemble de pompage 25 est par exemple piloté par l'unité de commande 18.

Le circuit de liquide 10 décrit ci-dessus est particulièrement avantageux car il permet d'assurer un dosage précis du produit liquide provenant du système de transfert étanche 12 pour le remplissage de la cuve principale 11.

## Revendications

1. Circuit de liquide (10) pour pulvérisateur agricole (100) comprenant :
- une cuve principale (11),
- un système de transfert étanche (12) apte à transférer un produit liquide contenu dans un bidon (14) vers le circuit de liquide (10) de façon étanche,
- un mécanisme d'aspiration (13) conçu pour aspirer du produit liquide provenant du système de transfert étanche (12) et pour refouler ledit produit liquide vers la cuve principale (11),
- un mécanisme doseur (17) agencé en aval du système de transfert étanche (12) et en amont du mécanisme d'aspiration (13),
- une unité de commande (18) conçue pour déterminer une quantité de produit liquide à fournir au mécanisme d'aspiration (13) pour le remplissage de la cuve principale (11), et pour commander le mécanisme doseur (17) de fournir la quantité déterminée de produit liquide au mécanisme d'aspiration (13), de manière à doser le produit liquide transféré du système de transfert étanche (12) à la cuve principale (11),
le mécanisme doseur (17) comprenant par ailleurs une pompe volumétrique (17a) agencée en aval du système de transfert étanche (12) et en amont du mécanisme d'aspiration (13), et le circuit de liquide (10) étant **caractérisé en ce qu'**il comprend en outre
une voie de dérivation (20) agencée en parallèle de la pompe volumétrique (17a), entre le système de transfert étanche (12) et le mécanisme d'aspiration (13), et conçue pour autoriser du produit liquide provenant du système de transfert étanche (12) de contourner la pompe volumétrique (17a) pour son aspiration par le mécanisme d'aspiration (13), lorsque la voie de dérivation (20) est ouverte.

2. Circuit de liquide (10) selon la revendication 1, dans lequel la pompe volumétrique (17a) est :
- une pompe à engrenages ou à lobes, ou
- une pompe à pistons axiaux à cylindrée variable, à plateau inclinable ou à axe brisé, ou
- une pompe péristaltique, ou
- une pompe sans vanne à unique piston rotatif, ou
- une pompe à piston avec clapet.

3. Circuit de liquide (10) selon l'une des revendications 1 à 2, dans lequel l'unité de commande (18) est conçue pour déterminer, à partir de la quantité déterminée de liquide de traitement et d'une cylindrée de la pompe volumétrique (17a), d'un nombre de tours à effectuer par la pompe volumétrique (17a), et pour commander la pompe de volumétrique (17a) de tourner le nombre déterminé de tours.

4. Circuit de liquide (10) selon l'une des revendications 1 à 3, dans lequel l'unité de commande (18) est conçue pour commander la pompe volumétrique (17a) de tourner à une vitesse de rotation plus élevée pendant une phase d'aspiration et à une vitesse de rotation plus faible pendant une phase de refoulement de chaque cycle de la pompe volumétrique (17a), la variation de vitesse de rotation entre la phase d'aspiration et de refoulement étant progressive.

5. Circuit de liquide (10) selon l'une des revendications 1 à 4, dans lequel le mécanisme doseur (17) comprend une vanne doseuse conçue pour s'ouvrir et se fermer et un débitmètre agencé en amont ou en aval de la vanne doseuse et en amont du mécanisme d'aspiration (13) et conçu pour mesurer un débit de produit liquide s'écoulant depuis la vanne doseuse vers le mécanisme d'aspiration (13), l'unité de commande (18) étant conçue pour déterminer, à partir du débit mesuré par le débitmètre et de la quantité déterminée de produit liquide, une quantité restante de produit liquide à fournir au mécanisme d'aspiration (13) pour le remplissage de la cuve principale (11), et pour commander la vanne doseuse de se fermer lorsque la quantité restante déterminée de produit liquide est nulle.

6. Circuit de liquide (10) selon l'une des revendications 1 à 5, comprenant une cuve de rinçage (23) destinée à contenir un liquide de rinçage et une voie de rinçage (24) reliant la cuve de rinçage (23) à un dispositif de rinçage (12a) du système de transfert étanche (12) apte à rincer le bidon (14) et comprenant une pompe de rinçage (24a) conçue pour aspirer du liquide de rinçage provenant de la cuve de rinçage (23) et pour le refouler vers le dispositif de rinçage (12a).

7. Pulvérisateur agricole (100) pour engin agricole comprenant un circuit de liquide (10) selon l'une des revendications à 6.

8. Engin agricole comprenant un pulvérisateur agricole (100) selon la revendication 7, dans lequel le système de transfert étanche (12) est embarqué à bord de l'engin agricole.

## Patentansprüche

1. Flüssigkeitskreislauf (10) für Feldspritze (100), umfassend:
- einen Hauptbehälter (11),
- ein abgedichtetes Übertragungssystem (12), das dazu geeignet ist, um ein flüssiges Produkt, das in einem Kanister (14) enthalten ist, auf abgedichtete Weise in den Flüssigkeitskreislauf (10) zu übertragen,
- einen Saugmechanismus (13), der konzipiert ist, um das flüssiges Produkt aus dem abgedichteten Übertragungssystem (12) anzusaugen und das flüssige Produkt in den Hauptbehälter (11) zu fördern,
- einen Dosiermechanismus (17), der stromabwärts von dem abgedichteten Übertragungssystem (12) und stromaufwärts von dem Saugmechanismus (13) angeordnet ist,
- eine Steuereinheit (18), die konzipiert ist, um eine Menge an flüssigem Produkt zu bestimmen, die dem Saugmechanismus (13) zum Füllen des Hauptbehälters (11) zugeführt werden soll, und um den Dosiermechanismus (17) zu steuern, um dem Saugmechanismus (13) die bestimmte Menge an flüssigem Produkt zuzuführen, um das flüssige Produkt zu dosieren, das von dem abgedichteten Übertragungssystem (12) zu dem Hauptbehälter (11) übertragen wird,
der Dosiermechanismus (17) ferner umfassend eine volumetrische Pumpe (17a) umfasst, die stromabwärts von dem abgedichteten Übertragungssystem (12) und stromaufwärts von dem Saugmechanismus (13) angeordnet ist, und wobei der Flüssigkeitskreislauf (10) **dadurch gekennzeichnet ist, dass** er ferner einen Bypassweg (20) umfasst, der parallel zu der volumetrischen Pumpe (17a) zwischen dem abgedichteten Übertragungssystem (12) und dem Saugmechanismus (13) angeordnet und konzipiert ist, um dem flüssigen Produkt aus dem abgedichteten Übertragungssystem (12) zu ermöglichen, die volumetrische Pumpe (17a) zu umgehen, um durch den Saugmechanismus (13) angesaugt zu werden, wenn der Bypassweg (20) geöffnet ist.

2. Flüssigkeitskreislauf (10) nach Anspruch 1, wobei die volumetrische Pumpe (17a) wie folgt ist:
- eine Zahnrad- oder Drehkolbenpumpe oder
- eine Axialkolbenpumpe mit variablem Hubraum, neigbarer Scheibe oder in Schrägachsenbauart
- eine Peristaltikpumpe oder
- eine ventillose Pumpe mit einzigem Drehkolben oder
- eine Kolbenpumpe mit Ventil.

3. Flüssigkeitskreislauf (10) nach einem der Ansprüche 1 bis 2, wobei die Steuereinheit (18) konzipiert ist, um anhand der bestimmten Menge an Prozessflüssigkeit und eines Hubraums der volumetrischen Pumpe (17a) eine Anzahl von Umdrehungen zu bestimmen, die von der volumetrischen Pumpe (17a) durchzuführen sind, und die volumetrische Pumpe (17a) zu steuern, um die bestimmte Anzahl von Umdrehungen zu drehen.

4. Flüssigkeitskreislauf (10) nach einem der Ansprüche 1 bis 3, wobei die Steuereinheit (18) konzipiert ist, um die volumetrische Pumpe (17a) zu steuern, um während einer Ansaugphase mit einer höheren Drehzahl und während einer Ausstoßphase jedes Zyklus der volumetrischen Pumpe (17a) mit einer niedrigeren Drehzahl zu laufen, wobei die Änderung der Drehzahl zwischen der Ansaug- und der Ausstoßphase progressiv ist.

5. Flüssigkeitskreislauf (10) nach einem der Ansprüche 1 bis 4, der Dosiermechanismus (17) umfassend ein Dosierventil, das konzipiert ist, um zu öffnen und zu schließen, und einen Durchflussmesser, der stromaufwärts oder stromabwärts von dem Dosierventil und stromaufwärts von dem Ansaugmechanismus (13) angeordnet ist und zum Messen einer Durchflussrate des flüssigen Produkts konzipiert ist, das von dem Dosierventil zu dem Ansaugmechanismus (13) fließt, wobei die Steuereinheit (18) konzipiert ist, um anhand der von dem Durchflussmesser gemessenen Durchflussrate und der bestimmten Menge an flüssigem Produkt eine Restmenge an flüssigem Produkt zu bestimmen, die dem Saugmechanismus (13) zum Füllen des Hauptbehälters (11) zugeführt werden soll, und um das Dosierventil zu steuern, um zu schließen, wenn die bestimmte Restmenge an flüssigem Produkt Null ist.

6. Flüssigkeitskreislauf (10) nach einem der Ansprüche 1 bis 5, umfassend einen Spülbehälter (23) zum Aufnehmen einer Spülflüssigkeit und einen Spülweg (24), der den Spülbehälter (23) mit einer Spülvorrichtung (12a) des abgedichteten Übertragungssystems (12) verbindet, die zum Spülen des Kanisters (14) geeignet ist und umfassend eine Spülpumpe (24a), die konzipiert ist, um die Spülflüssigkeit aus dem Spülbehälter (23) anzusaugen und sie zu der Spülvorrichtung (12a) zu fördern.

7. Feldspritze (100) für landwirtschaftliche Maschine, umfassend einen Flüssigkeitskreislauf (10) nach einem der Ansprüche 1 bis 6.

8. Landwirtschaftliche Maschine, umfassend eine Feldspritze (100) nach Anspruch 7, wobei das abgedichtete Übertragungssystem (12) an Bord der landwirtschaftlichen Maschine ist.

## Claims

1. Liquid circuit (10) for an agricultural sprayer (100) comprising:
- a main tank (11),
- a sealed transfer system (12) able to transfer a liquid product contained in a drum (14) to the liquid circuit (10) in a sealed manner,
- a suction mechanism (13) designed to suck the liquid product coming from the sealed transfer system (12) and to discharge said liquid product to the main tank (11),
- a dosing mechanism (17) arranged downstream from the sealed transfer system (12) and upstream from the suction mechanism (13),
- a control unit (18) designed to determine a quantity of liquid product to be provided to the suction mechanism (13) for the filling of the main tank (11), and to control the dosing mechanism (17) to provide the determined quantity of liquid product to the suction mechanism (13), in such a way as to meter the liquid product transferred from the sealed transfer system (12) to the main tank (11),
the dosing mechanism (17) further comprising a displacement pump (17a) arranged downstream from the sealed transfer system (12) and upstream from the suction mechanism (13), and the liquid circuit (10) being **characterized in that** it further comprises a diversion channel (20) arranged parallel to the displacement pump (17a), between the sealed transfer system (12) and the suction mechanism (13), and designed to authorize the liquid product coming from the sealed transfer system (12) to bypass the displacement pump (17a) for the suction thereof by the suction mechanism (13), when the diversion channel (20) is open.

2. Liquid circuit (10) according to claim 1, wherein the displacement pump (17a) is:
- a gear or lobe pump, or
- a variable displacement, swash plate or bent-axis axial piston pump, or
- a peristaltic pump, or
- a single rotary piston valveless pump , or
- a piston pump with valve.

3. Liquid circuit (10) according to one of claims 1 to 2, wherein the control unit (18) is designed to determine, from the determined quantity of processing liquid and a displacement of the displacement pump (17a), a number of revolutions to be carried out by the displacement pump (17a), and to control the displacement pump (17a) to rotate the determined number of revolutions.

4. Liquid circuit (10) according to one of claims 1 to 3, wherein the control unit (18) is designed to control the displacement pump (17a) to rotate at a higher rotation speed during a suction phase and at a lower rotation speed during a discharge phase of each cycle of the displacement pump (17a), the variation in the rotation speed between the suction and discharge phase being progressive.

5. Liquid circuit (10) according to one of claims 1 to 4, wherein the dosing mechanism (17) comprises a dosing valve designed to open and close and a flowmeter arranged upstream or downstream from the dosing valve and upstream from the suction mechanism (13) and designed to measure a flow rate of liquid product flowing from the dosing valve to the suction mechanism (13), the control unit (18) being designed to determine, from the flow rate measured by the flowmeter and from the determined quantity of liquid product, a remaining quantity of liquid product to be provided to the suction mechanism (13) for the filling of the main tank (11), and to control the dosing valve to close when the determined remaining quantity of liquid product is zero.

6. Liquid circuit (10) according to one of claims 1 to 5, comprising a rinsing tank (23) configured to contain a rinsing liquid and a rinsing channel (24) connecting the rinsing tank (23) to a rinsing device (12a) of the sealed transfer system (12) able to rinse the drum (14) and comprising a rinsing pump (24a) designed to suck the rinsing liquid coming from the rinsing tank (23) and to discharge it to the rinsing device (12a).

7. Agricultural sprayer (100) for an agricultural machine comprising a liquid circuit (10) according to one of claims 1 to 6.

8. Agricultural machine comprising an agricultural sprayer (100) according to claim 7, wherein the sealed transfer system (12) is onboard the agricultural machine.
